# EUROPEAN PATENT APPLICATION

(11) **EP 3 974 484 A1**
(43) Date of publication of application: **30.03.2022**
(21) Application number: 20198631.2
(22) Date of filing: 28.09.2020
(51) Int. Cl.: C09D 11/106

(54) **USE OF ETHYLENE VINYL ACETALS AS BINDER IN PRINTING INKS**

(71) Applicant: Kuraray Europe GmbH, 65795 Hattersheim (DE)
(72) Inventor: Frank, Michael, 55268 Nieder-Olm (DE)
(74) Representative: Janßen, Christian Oliver

(57) **Abstract**

The invention is directed to the use of certain ethylene vinyl acetals as binders in printing inks.

## Description

The invention is directed to the use of ethylene vinyl acetals as binder in printing inks.

The use of polyvinyl acetals, in particular polyvinyl butyrals, as binders in printing ink formulations has long been known. For this purpose, polyvinyl acetals which exhibit minimal viscosity in solution are often used. At the same time it is thus possible to achieve a high content of pigment and binding agent in the printing ink, which then leads to a desired high intensity of color. Such printing inks are widely used in the food packaging industry as almost all food packages are being printed on for information and advertising purposes.

Polyvinyl acetals and their use as binder in printing inks are expected to provide sufficient technical performance, especially the adhesion of the ink to the polymers OPP (oriented polypropylene) and PE (polyethylene), which are the most common substrates to be printed in the food industry, is critical and must have a minimum level. Therefore the addition of adhesion promoters is widely used and state of the art. On the other hand these adhesion promoters are typically non-polymeric materials and smaller molecules. They are often able to migrate from the ink into and through the different layers of the packaging material and in worse case scenarios they can have finally direct contact with foodstuffs. As safety requirements in the food industry are becoming more and more stringent such scenarios shall be avoided.

Thus, there is a need in the food industry for improved binders for ink formulations.

Therefore, one objective of the invention is to provide printing ink binders with improved adhesion, improved compatibility and barrier properties, with an improved environmental and safety impact and/or with a better economical profile in the production and use of the printing ink.

These and other objectives are surprisingly solved by the present invention. It has been surprisingly found that the use of the ethylene vinyl acetals with a rather high ethylene content according to the present invention not only lead to an improved compatibility to the polymers OPP (oriented polypropylene) and PE (polyethylene), and thus, leading to an improved adhesion of the printing inks comprising these as a binder. Additionally, these acetalized ethylene vinyl alcohols (EVOH) keep the well-known oxygen barrier properties of the non-acetalized starting material EVOH. Hence, using the ethylene vinyl acetals according to this invention leads to an improvement in the printing process itself while adding an oxygen barrier, which is basically absent from materials like the substrates PE and OPP as well as the commonly used binder PVB.

Accordingly, the present invention concerns the use of an ethylene vinyl acetal as a binder in printing ink formulations wherein the ethylene vinyl acetal comprises ethylene units in the range of 25 to 60 mol%.

The ethylene vinyl acetal of the present invention can be obtained by subjecting an aldehyde to an acetalization reaction with an ethylene vinyl alcohol (EVOH). Such ethylene vinyl alcohols are known in the art and can be obtained by copolymerizing ethylene in the presence of an acidic catalyst. Furthermore, ethylene vinyl alcohols are commercially available.

Preferably, the ethylene vinyl alcohol is obtained by copolymerizing ethylene and a vinyl acetate and hydrolysing the obtained copolymer. In the hydrolysation reaction, a conventionally known alkali catalyst or an acid catalyst can be used and among them, a hydrolysation reaction using methanol as a solvent and caustic soda (NaOH) catalyst is convenient.

Preferably, the percentage of ethylene units in the ethylene vinyl alcohol is 25 to 60 mol%, more preferably 30 to 55 mol%, and still more preferably 35 to 50 mol%. The reaction product obtained after the acetalization reaction is neutralized with alkali, and then washed with water to obtain the ethylene vinyl acetal.

The catalyst for carrying out the acetalization reaction is not particularly limited, and any organic acid or inorganic acid may be used. Examples thereof include acetic acid, para toluenesulfonic acid, nitric acid, sulfuric acid, hydrochloric acid, carbonic acid, and the like.

Although there is no particular limitation on the degree of saponification of the acetate groups, it is preferably 95 mol% or more, more preferably 98 mol% or more, still more preferably 99 mol% or more, and most preferably 99.9 mol% or more.

Preferably, the percentage of ethylene units in the ethylene vinyl acetal is 30 to 55 mol%, and more preferably 35 to 50 mol%. Also preferably, the percentage of ethylene units in the ethylene vinyl acetal is from 50 to 60 mol%.

Preferably, the acetal groups individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. Most preferably, they derive from the condensation reaction with iso-butyraldehyde, acetaldehyde and/or n-butyraldehyde.

Also preferably, the ethylene vinyl acetals used in the inventive process are mixed acetals, i.e. they comprise at least two different acetal groups. In other words, the ethylene vinyl acetals as used in the invention comprise a first acetal group derived from the reaction of two hydroxyl groups of the respective ethylene vinyl alcohol with one aldehyde and at least a second acetal group derived from the reaction of two other hydroxyl groups of the respective ethylene vinyl alcohol with a second aldehyde, wherein the first aldehyde is different from the second aldehyde. The preferred aldehydes are the same as used for the acetals with one acetal group as listed above; the most preferable combination is a mixture of acetals derived from acetaldehyde and n-butyraldehyde.

Although there is no particular limitation to the method for producing the ethylene vinyl acetals used in this embodiment of the present invention, they can be produced by a method in which an aldehyde is added to an ethylene vinyl alcohol solution under acidic conditions and subjected to an acetalization reaction.

Preferably, the degree of acetalization of the ethylene vinyl acetal used in the present invention is 5 mol% or more and less than 40 mol%, more preferably the lower limit of the degree of acetalization is more than 6 mol%, more than 7 mol%, more than 8 mol%, more than 9 mol%, and most preferably more than 10 mol%. Further, the upper limit of the degree of acetalization is more preferably 38 mol% or less, 36 mol% or less, 34 mol% or less, and 32 mol% or less in this order, and most preferably less than 30 mol%.

Preferably, the percentage of vinyl alcohol units in the ethylenevinyl acetal resin of the present invention is 24 to 71 mol% based on the total monomer unit constituting the resin.

The vinyl alcohol content and vinyl acetate content of ethylene vinyl acetals were determined in accordance with DIN ISO 3681 (Acetate content) and DIN ISO 53240 (PVA content). The vinyl acetal content is calculated as the remaining portion from the sum of vinyl alcohol content and vinyl acetate content determined in accordance with DIN ISO 53401/53240 and the ethylene needed to make one hundred. The degree of acetalisation is calculated from the amount of vinyl acetal content divided by the sum of vinyl alcohol content, vinyl acetal content and vinyl acetate content. Conversion from % by weight into mol % is achieved by formulas known to the person skilled in the art.

The ethylene content of the ethylene vinyl acetate copolymer is measured by NMR spectroscopy. First, the ethylene vinyl acetal resin is dissolved in ethanol and a 2 N hydrochloride hydroxylamine solution and hydrochloric acid are added, and the mixture is stirred under reflux with a condenser in a water bath for 4 hours, and after cooling, ammonia water is added. Afterwards, methanol is added and the polymer is precipitated, washed and dried to obtain the acetylated ethylene vinyl alcohol copolymer. Then, the acetylated ethylene vinyl alcohol copolymer is dissolved in DMSO (dimethyl sulfoxide) at 120 °C, cooled to room temperature, and then N,N-dimethyl-4-aminopyridine and acetic anhydride are added thereto, followed by stirring for 1 h, followed by precipitation with ion-exchanged water and acetone, and drying to obtain an ethylene vinyl acetate copolymer. The polymer is dissolved in DMSO-d6 and measured by a proton NMR spectrometer of 400 MHz. The spectrum obtained was integrated 256 times. The molar ratio of the ethylene unist of the ethylene vinyl alcohol copolymer is calculated from the intensity ratio of the methine proton (peak of 1.1 to 1.9 ppm) derived from the ethylene unit and the vinyl acetate unit, and the terminal methyl proton (peak of 2.0ppm) derived from the vinyl acetate unit. Note that, since the ethylene unit is not affected by the acetalization reaction, the molar ratio (n) of the ethylene unit of the ethylene vinyl alcohol copolymer before the acetalization reaction is equal to the molar ratio (n) of the ethylene unit of the ethylene vinyl acetal resin obtained after the acetalization reaction.

In a second aspect, the present invention concerns a printing ink comprising an ethylene vinyl acetal as a binder wherein the ethylene vinyl acetal comprises ethylene units in the range of 25 to 60 mol%.

Preferably, the acetal group has 2 to 7 carbon atoms and is derived from the same aldehyde(s) as described above. Most preferably, the ethylene vinyl acetal comprises n-butylaldehyde and/or acetaldehyde acetal groups.

Also preferably, the printing ink comprises a co-binders. Suitable co-binders include polyurethanes (PU), nitrocellulose (NC), polyamides (PA) and mixtures thereof. Most preferably, the co-binder is polyurethane and/or nitrocellulose.

In addition to the printing ink binders according to the present invention, the printing ink may comprise other components chosen inter alia from colorants, for example insoluble organic and/or inorganic pigments or soluble dyes, especially organic pigments like PY13, PR57:1; PB15:3; PG7, PB61, PV23, titanium dioxide, carbon black, metallic effect pigments, e.g. powdered aluminum or brass, and additives like fillers, e.g. kaolin or chalk, acid catalysts, adhesion promoters, amine solubiliser, antifoam agents, biocides, dispersing agents, flow agents, jellifying agents, inhibitors, ink stabilisers, optical brighteners, photoinitiators, siccative agents, slip agents, suspension agents, plasticizer, thickeners, UV stabilisers, waxes, and/or wetting agents.

The material used for the inventive process can also comprise other polymers different from the ethylene vinyl acetals described above. It can comprise one or more other ethylene vinyl acetal grades, differing in hydroxyl content and/or degree of polymerization and/or degree of acetate content and/or type of acetal and/or in ethylene content.

Methods for coating a substrate with the printing ink of the invention include well-known methods such as direct coating and printing. For directly coating the substrate with the printing ink, methods including curtain coating, flow coating and roll coating can be used. Where the printing ink composition is low in viscosity, direct coating such as spray coating can also be employed. Printing processes used for coating include offset printing, gravure offset printing, and gravure and flexographic printing processes.

The thickness of the coating film produced by these processes can be 0.25 to 25 micrometers, and typically, 1 to 10 micrometers.

Substrates may include paper, wood, plastic, or textiles. In particular, printing inks of the invention may be applied to paper and films or sheets of polyethylene, polyvinyl chloride, polypropylene, polyester, polycarbonate, and polyamide, and paper treated with any of these materials.

The substrate may preferably be pre-treated for a better coating or printing result, e.g. by corona treatment known in the art.

The substrate coated or printing with the ink composition is generally laminated to protect it. The lamination is carried out by procedures well known to a person skilled in the art. Laminates in general are obtained for example by applying the ink-formulation to surface of a plastic substrate. After drying, a coated substrate is obtained. Subsequently a lamination adhesive is used to fix a second plastic surface to the coated substrate.

### Examples

### Example 1 - ethylene vinyl acetal

100 parts by weight of the ethylene vinyl alcohol copolymer containing 44 mol% of ethylene units (saponification degree: 99%) synthesized according to the process described in Japanese Patent Application Laid-Open No. 2016-28139 were dispersed in 315 parts by weight of 1-propanol and the temperature of the solution was raised to 60 °C with agitation. Afterwards, 40 parts by weight of 1 M hydrochloric acid was added, followed by 16.7 parts by weight of n-butyraldehyde while maintaining the temperature at 60 °C. As the reaction proceeded, the ethylene vinyl alcohol copolymer dissolved and the reaction mixture became a homogeneous solution. After 36 hours, 6.4 parts by weight of sodium hydrogen carbonate was added to stop the reaction. After adding 500 parts by weight of 1-propanol to the reaction solution to make it uniform, it was added dropwise to 2000 parts by weight of water to precipitate a resin. Thereafter, the operation of filtration and washing with water was repeated three times, the resulting solid was vacuum dried at 60 °C for 8 hours. The ethylene vinyl acetal thus obtained has a content of ethylene units of 44 mol% and an acetalization degree of 31 mol% and is subsequently used to prepare a printing ink as described above. The printing ink thus produced was used in the printing process as described above. The engineering properties are measured on the resulting specimen.

### Example 2 - ethylene vinyl acetal

100 parts by weight of the ethylene vinyl alcohol copolymer synthesized according to the process described in Japanese Patent Application Laid-Open No. 2016-28139 were dispersed in 315 parts by weight of 1-propanol containing 44 mol% of ethylene units (saponification degree: 99%) and the temperature of the solution was raised to 60 °C with agitation. Afterwards, 40 parts by weight of 2M hydrochloric acid was added, followed by 30.0 parts by weight of n-butyraldehyde while maintaining the temperature at 60 °C. As the reaction proceeded, the ethylene vinyl alcohol copolymer dissolved and the reaction mixture became a homogeneous solution. After 36 hours, 12.8 parts by weight of sodium hydrogen carbonate was added to stop the reaction. After adding 500 parts by weight of 1-propanol to the reaction solution to make it uniform, it was added dropwise to 2000 parts by weight of water to precipitate a resin. Thereafter, the operation of filtration and washing with water was repeated three times, the resulting solid was vacuum dried at 60 °C for 8 hours. The ethylene vinyl acetal thus obtained has a content of ethylene units of 44 mol% and an acetalization degree of 55 mol% and is subsequently used to prepare a printing ink as described above. The printing ink thus produced was used in the printing process as described above. The engineering properties are measured on the resulting specimen.

### Comparative Example 1 - n-butyl acetal

Mowital^{®} polyvinyl acetal resin B 20 H obtained from Kuraray Europe GmbH, which contains acetal units prepared from n-butyraldehyde and a polyvinyl alcohol with no ethylene units in the polymer chain, is used to prepare a printing ink as described above. The printing ink thus produced is used in the printing process as described above. The engineering properties are measured on the resulting specimen.

### Preparation of the printing ink

The printing ink is prepared as follows: 44.2 g ethylene vinyl acetal or polyvinyl acetal (for comparative example) are dissolved in 208.4 g ethanol at room temperature. Subsequently, 88.8 g Irgalite^{®} Blue GLO (pigment available from BASF SE) is added. The resulting mixture is dispersed using a Getzmann Dispermat^{®}, model CA 40-C, with the following settings:
1) 45 min dispersing time,
2) 650 g glass beads (diameter 2 mm),
3) stirring speed 5000 rpm

Following dispersing, the pigment concentrate is separated from the glass beads on a filter. To prepare the printing ink from the pigment concentrate, 72 g of the pigment concentrate are taken and this initial charge is diluted with a 20% strength by weight solution of the respective ethylene vinyl acetal (or polyvinyl acetal) in ethanol until the printing ink has a fixed pigment to ethylene vinyl acetal (or to polyvinyl acetal) ratio of 1:1.7. For the comparative example only it is added polyethyleneimine product as adhesion promoter: Lupasol WF (trademark of BASF, Ludwigshafen) with 0.75%.

### Application of printing ink

The ink is applied on the treated side (corona technique) of a coextruded OPP film (Oriented Polypropylene Film, obtained from Mitsubishi Chemicals) using a small lab gravure printer (Labratester 180 from Norbert Schläfli Maschinen). The inks are applied as a single layer. The resulting prints are dried at room temperature over a period of about 16 hours, before making a laminate.

### Preparation of the final laminate

The coextruded OPP films with the printed inks prepared above are laminated to a second coextruded OPP film using a polyurethane adhesive to give OPP/OPP laminates according to the following procedure.

A 2-component polyurethane lamination adhesive is prepared by mixing Morchem Hardener CS-90 (3.25 g, obtained from MORCHEM GmbH, Germany), Morchem PS 246 A (50.0 g, obtained from MORCHEM GmbH, Germany) and ethyl acetate (54.8 g).

The freshly prepared adhesive is applied to the second (unprinted) film at a coating weight of 3.0 g/m² (dry), and subsequently dried in the oven for 45s at 80°C to evaporate the solvent. The printed film is then carefully applied with the printed side to the adhesive print, thereby avoiding creation of air bubbles in the laminate. The resulting laminates are stored for 3 days under pressure, in order to allow the adhesive to cure.

### Peel test

A number of 5 strips with a width of 15 ± 0,1 mm are cut from the cured laminate and the lamination bond strength is tested in a peel test using a tensile testing machine. Measurement is done at a speed of 150 mm/min. The peeling path is at least 20 mm.

During the measurement, the laminated stripe is kept under a constant 90° angle against the film clamps. Measurements are done according to DIN 53357. Sample preparation is in accordance with DIN 16906. The results of the tests show that the laminates prepared with the ethylene vinyl acetals lead to an improved performance, e.g. in the number of OPP film breakage (marked with "B") as opposed to laminate failure caused by peeling the laminate (marked with "P"). The breakage of the OPP film indicates that the lamination strength with the binder / ink system is higher than the tensile strength of the OPP film itself, indicating a very good performance of the PVB comparison as an ink binder. The results show that the laminates obtained using an ethylene vinyl acetal as a binder give better performance even without an adhesion promoter.

## Claims

1. Use of an ethylene vinyl acetal as a binder in ink formulations wherein the ethylene vinyl acetal comprises ethylene units in the range of 25 to 60 mol%.

2. The use according to claim 1 wherein the acetal group has 2 to 7 carbon atoms.

3. The use according to claim 1 or 2 wherein the ethylene vinyl acetal comprises n-butyraldehyde and/or iso-butyraldehyde acetal groups.

4. The use according to any one of claims 1 to 3 wherein the residual vinyl alcohol in the ethylene vinyl acetals is 15 to 40 mol%.

5. A printing ink comprising an ethylene vinyl acetal as a binder wherein the ethylene vinyl acetal comprises ethylene units in the range of 25 to 60 mol%.

6. The printing ink according to claim 5 wherein the acetal group has 2 to 7 carbon atoms.

7. The printing ink according to claim 5 or 6 wherein the ethylene vinyl acetal comprises n-butyraldehyde and/or acetaldehyde acetal groups.

8. The printing ink according to claim 5, 6 or 7 wherein the ethylene vinyl acetal comprises other co-binders.

9. The printing ink according to claim 8 wherein the ethylene vinyl acetal comprises polyurethane and/or nitrocellulose as co-binder.
